Europäisches Patentamt

European Patent Office

Office européen des brevets

(19)

(11) Veröffentlichungsnummer : **0 143 352**
**B1**

(12) # EUROPÄISCHE PATENTSCHRIFT

(45) Veröffentlichungstag der Patentschrift :
**27.05.87**

(51) Int. Cl.[4] : **B 32 B 27/36**

(21) Anmeldenummer : **84113031.3**

(22) Anmeldetag : **30.10.84**

(54) **Elektrisch leitfähige Polycarbonat-Verbundwerkstoffe, ihre Herstellung und Verwendung.**

(30) Priorität : **11.11.83 DE 3340930**

(43) Veröffentlichungstag der Anmeldung :
**05.06.85 Patentblatt 85/23**

(45) Bekanntmachung des Hinweises auf die Patenterteilung : **27.05.87 Patentblatt 87/22**

(84) Benannte Vertragsstaaten :
**DE FR GB IT**

(56) Entgegenhaltungen :
**EP-A- 0 032 379**
**BE-A- 720 314**
**DE-A- 2 542 650**
**FR-A- 2 148 143**
**GB-A- 2 003 088**
**US-A- 3 654 187**
**PATENTS ABSTRACTS OF JAPAN, Band 2, Nr. 116, 27. September 1978, E Section, Seite 6663E78; & JP - A - 53 82413 (RICOH K.K.) 20.07.1978**

(73) Patentinhaber : **BAYER AG**
**Konzernverwaltung RP Patentabteilung**
**D-5090 Leverkusen 1 Bayerwerk (DE)**

(72) Erfinder : **Schulte, Bernhard, Dr.**
**Südwall 80a**
**D-4150 Krefeld (DE)**
Erfinder : **Tischer, Werner, Dipl.-Ing.**
**Am Norfbach 9**
**D-4047 Dormagen 11 (DE)**
Erfinder : **Kaloff, Hans, Dr.**
**Lessingstrasse 12**
**D-4047 Dormagen 5 (DE)**
Erfinder : **Weber, Hans-Leo, Dipl.-Ing.**
**Dahlienweg 7**
**D-4049 Rommerskirchen (DE)**

**Beschreibung**

Gegenstand der vorliegenden Erfindung sind Polycarbonat-Verbundwerkstoffe, vorzugsweise Folien oder Platten, bestehend aus

A) einer aromatischen, thermoplastischen Polycarbonat-Schicht mit einem Gehalt an Ruß oder Graphit, insbesondere an Ruß, von 5 bis 45 Gew.- %, vorzugsweise von 10 bis 40 Gew.- % und insbesondere von 20 bis 35 Gew.- %, bezogen auf das Gewicht der Polycarbonatschicht A), mit einem $\bar{M}w$ (Gewichtsmittelmolekulargewicht ; GPC-Bestimmungen) zwischen 20 000 und 300 000, vorzugsweise zwischen 40 000 und 250 000, insbesondere zwischen 60 000 und 200 000 des verwendeten Polycarbonats, einem spezifischen Oberflächenwiderstand von 5 bis $10^6$ $\Omega$ und insbesondere von 10 bis $10^3$ $\Omega$ und mit einer Dicke von 0,002 bis 0,4 mm und

B) einer damit fest verbundenen Schicht aus aromatischem, thermoplastischem Polycarbonat mit einem $\bar{M}w$ (Gewichtsmittelmolekulargewicht) von 10 000 bis 60 000 und mit einer Dicke von 0,02 bis 5 mm, vorzugsweise von 0,05 bis 2 mm.

Kohlenstoffhaltige Polycarbonatfolien sind bekannt (siehe beispielsweise BE-A-720 314, US-A-3 654-187, US-A-3 697 450 und EP-A-0 032 379). Derartige, allerdings mit sehr geringen Rußmengen von 2 bis 3 Gew.- % gefüllte Polycarbonatfolien werden z. B. als Verbundwerkstoffe mit Schichten aus anderen Kunststoffen für technische Anwendungen als elektrostatisches Aufzeichnungsmaterial beschrieben (siehe JP-A-159 149 vom 28.12.1976, publiziert am 20.07.1978). Rußhaltige Verbundwerkstoffe aus anderen Kunststoffmaterialien können beispielsweise für antistatische Zwecke (siehe rumänische Patentanmeldung 219 465 vom 22.07.1965, publiziert Oktober 1968), als Heizplatten (siehe JP-A-107 242 vom 09.09.1976, publiziert 29.03.1978) oder als Heizelemente (siehe US-A-3 900 654 bzw. BE-A-770 820) Verwendung finden.

Alle diese Möglichkeiten haben jedoch die Nachteile, daß entweder relativ geringe Rußmengen in eine Polycarbonat-Schicht des Laminats eingearbeitet sind, oder daß die hochgefüllte elektrisch leitende Schicht anderer thermoplastischer Kunststoffe mit z. B. Rußgehalten bis 50 Gew.- % zwischen zwei Isolierschichten gestützt ist.

Aus der französischen Patentschrift 2 148 143 bzw. aus der entsprechenden deutschen Offenlegungsschrift 22 38 116 sind Verbundfolien mit Antistauboberfläche bekannt, die aus mindestens einer rußhaltigen Folie und mindestens einer ruß-freien Folie aufgebaut sind, und wobei die freie Oberfläche der Folie im Verbund, die keinen Ruß enthält, die Antistauboberfläche ist ; bevorzugt werden jedoch Sandwich-Laminatkonstruktionen, bei der die Folie, welche Ruß enthält, keine äußere Oberfläche des Blattmaterials bildet (DE-A-22 38 116, Seite 4. letzter Absatz und Seite 5, erster Absatz).

Als Materialien für die Einzelfolien des Verbundes dienen die verschiedensten Thermoplasten oder Gemische von Thermoplasten. Geeignete Thermoplasten sind u. a. Mischpolymere von Acrylnitril, Butadien und Styrol, Polyethylenterephthalat, Polybutylenterephthalat und auch Polycarbonat (DE-A-22 38 116, Seite 8, 2. Absatz bis einschließlich Seite 10, 1. Absatz). Bevorzugte Thermoplasten sind Vinylchloridhomopolymere oder -mischpolymere (DE-A-22 38 116, Seite 10, letzter Absatz).

Der vorliegenden Erfindung liegt die Erkenntnis zugrunde, daß elektrisch leitfähige Polycarbonat-Verbundwerkstoffe (z. B. in Form von Folien oder Platten) aus zwei fest miteinander verbundenen Schichten auch bei sehr niedrigen, spezifischen Oberflächenwiderständen von unter 1 000 $\Omega$ (gemessen entsprechend DIN 53 482) eine sehr hohe mechanische Festigkeit und außerdem hohe Thermoverformbarkeit, z. B. beim Tiefziehen aufweisen, wenn man die erfindungsgemäße Kombination aus den Schichten A) und B) einsetzt.

Die für die ruß- bzw. graphithaltige Polycarbonatschicht A) geeigneten aromatischen, thermoplastischen Polycarbonate sind die durch Umsetzung von Diphenolen, insbesondere von Dihydroxydiarylalkanen, mit Phosgen oder Diestern der Kohlensäure erhältlichen Polykondensate, wobei außer den unsubstituierten Dihydroxydiarylalkanen auch solche geeignet sind, deren Arylreste in o- und/oder m-Stellung zur Hydroxylgruppe Methylgruppen oder Halogenatome tragen.

Geeignete Diphenole sind z. B. Hydrochinon, Resorcin, 4,4'-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxy-phenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone, ferner $\alpha,\alpha'$-Bis-(hydroxy-phenyl)-diisopropylbenzol sowie die entsprechenden kernalkylierten bzw. kernhalogenierten Verbindungen. Bevorzugt sind Polycarbonate auf Basis Bis-(4-hydroxy-phenyl)-propan-2,2 (Bisphenol A), Bis-(-4-hydroxy-3,5-dichlor-phenyl)-propan-2,2 (Tetrachlorbisphenol A), Bis-(4-hydroxy-3,5-dibromphenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie $\alpha,\alpha'$-Bis-(4-hydroxy-phenyl)-p-di-isopropylbenzol. Weitere für die Herstellung der Polycarbonate geeignete Diphenole sind beispielsweise in den US-Patenten 3 028 365, 3 062 781 und 3 275 601 beschrieben.

Außer linearen Polycarbonaten sind auch verzweigte Polycarbonate geeignet ; derartige verzweigte Polycarbonate sind bekanntlich durch den Einbau geringer Mengen, vorzugsweise von Mengen zwischen

2

0,05 und 2,0 Mol-%, bezogen auf eingesetzte Diphenole, an drei- oder mehr als dreifunktionellen Verbindungen, beispielsweise solchen mit drei oder mehr als drei phenolischen Hydroxygruppen herstellbar (siehe dazu beispielsweise DE-A-1 570 533, DE-A-1 595 762 und DE-A-2 500 092). Einige der verwendbaren Verbindungen mit drei oder mehr als drei phenolischen Hydroxygruppen sind beispielsweise 1,3,5-Tri-(4-hydroxyphenyl)-benzol, 1,1,1-Tri-(4-hydroxyphenyl)-ethan, 2,4-Bis-(4-hydroxyphenyl-isopropyl)-phenol, 2-(4-Hydroxyphenyl)-2-(2,4-dihydroxyphenyl)-propan, Hexa-(4-(4-hydroxyphenylisopropyl)-phenyl)-ortho-terephthalsäureester, Tetra-(4-hydroxyphenyl)-methan, Tetra-(4-(4-hydroxyphenylisopropyl)-phenoxy)-methan und 1,4-Bis-(4'-4''-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Bevorzugte Polycarbonate sind solche aus Bisphenol-A, welche von 0 bis 5 Mol-%, bezogen auf Mole an Diphenolen, Bisphenol-Z einkondensiert enthalten.

Die erfindungsgemäß geeigneten Polycarbonate sollen relative Viskositäten $\eta$ rel von 1,2 bis 3,0, vorzugsweise 1,5 bis 2,5 und insbesondere 1,6 bis 2,4 aufweisen. (Die relativen Viskositäten sind in bekannter Weise an 0,5 g/100 ml $CH_2Cl_2$-Lösungen bei 25 °C gemessen). Daraus resultieren $\bar{M}w$-Werte zwischen etwa 20 000 und etwa 300 000, vorzugsweise zwischen etwa 40 000 und 250 000 und insbesondere zwischen 60 000 und 200 000. (GPC-Molekulargewichtsbestimmungen).

Die Herstellung der erfindungsgemäß geeigneten Polycarbonate erfolgt nach den bekannten Verfahren. Die Einstellung des Molekulargewichts erfolgt in bekannter Weise mit Kettenabbrechern wie Phenol, Halogenphenolen oder Alkylphenolen in den bekannten Mengen.

Die für die Schicht B) geeigneten aromatischen, thermoplastischen Polycarbonate entsprechen den vorstehend definierten mit der Maßgabe, daß deren $\bar{M}w$ (Gewichtsmittelmolekulargewicht aus GPC-Molekulargewichtsbestimmungen) von 10 000 bis 60 000, vorzugsweise von 20 000 bis 40 000 ist, die $\eta$ rel Werten in $CH_2Cl_2$ bei 25 °C und 0,5 g pro 100 ml zwischen 1,1 und 1,6, vorzugsweise zwischen 1,2 und 1,5 entsprechen.

Den thermoplastischen, aromatischen Polycarbonaten der Schicht B) können bis zu 45 Gew.-%, bezogen auf Gesamtgewicht an Schicht B), thermoplastische Polyethylenterephthalate, thermoplastische Polybutylenterephthalate und/oder thermoplastische ABS-Kunststoffe auf bekannte Weise zugesetzt werden. Den thermoplastischen aromatischen Polycarbonaten der Schicht B) können nicht leitfähige Additive und/oder nichtleitfähige Füllstoffe wie beispielsweise Flammschutzmittel, Stabilisatoren gegen Hitze und UV-Licht, Entformungsmittel, Farbstoffe, Glasfasern, Glaskugeln etc. in den bekannten Mengen zugesetzt werden.

Für die Herstellung der Polycarbonatschicht A) geeignete Ruße sind Gasruße, Furnace-Ruße oder Flammruße mit mittleren Primärpartikelgrößen, die im allgemeinen elektronenmikroskopisch ermittelt werden, von unter 200 Nanometer (nm), vorzugsweise unter 100 Nanometer (nm) und insbesondere mit einer mittleren Primärteilchengröße von kleiner als 50 Nanometer; für die Polycarbonatschicht A) erfindungsgemäß geeignete Graphite sind Graphitpulver oder Graphitstäube, die beispielsweise als Elektrodengraphit in einem breiten Kornspektrum mit Partikeldurchmessern bis zu 5 mm zur Verfügung stehen, wobei Graphitpulver mit mittleren Teilchengrößen bis zu 1 mm bevorzugt und insbesondere bis zu 0,5 mm verwendet werden, wobei die Graphitpartikel in der nachfolgend beschriebenen Weise in der Polycarbonatlösung weiter zerkleinert und feinstdispergiert werden.

Bevorzugt werden bekannte, sogenannte Leitfähigkeitsruße verwendet, die außer einer sehr geringen Primärteilchengröße eine große äußere und innere Oberfläche, d. h. hohe Porosität und somit hohe BET-Oberflächen bei der $N_2$- Adsorption und hohe Dibutylphthalat (DBP)-Adsorptionswerte aufweisen und weiterhin hochstrukturiert sind, d. h. starke Agglomerationen oder Aggregationen von einzelnen Rußteilchen zu größeren Gebilden wie z. B. Ketten aufweisen, wobei die BET-Oberflächen der Ruße im allgemeinen größer sind als 20 $m^2$/g und die DBP-Adsorptionen oberhalb von 40 ml pro 100 g Ruß liegen.

Insbesondere geeignet sind Leitfähigkeitsruße mit BET-Oberflächen von über 50 $m^2$/g und DBP-Adsorptionen von größer als 60 ml/100 g bei mittleren Primärpartikelgrößen von unter 50 Nanometer (nm). Derartige elektrisch leitfähige Ruße sind als handelsübliche Spezialruße mit ausgeprägten Strukturen und hohen elektrischen Leitfähigkeiten verfügbar.

Die Einarbeitung von Ruß oder Graphit in die thermoplastischen Polycarbonate erfolgt über Lösungen von Polycarbonaten, entweder direkt nach Abschluß des Herstellungsprozesses des Polycarbonates in die Reaktionslösungen oder nach erfolgter Isolierung des Polycarbonats in die separat hergestellten Polycarbonatlösungen, wobei die elektrisch leitfähigen Additive sowohl zunächst allein in geeigneten Medien vor dem Lösen der Polycarbonate suspendiert oder vorzerkleinert als auch in Gegenwart des gelösten Polycarbonats eingearbeitet und feinstdispergiert werden können. Es können auch beide Möglichkeiten kombiniert werden, wobei dann mit Vorteil eine stufenweise Feinstdispergierung unter Verwendung bekannter Dispergiereinrichtungen, wie z. B. Rotor-Stator Apparate, Dissolver-Scheiben, Hochdruckhomogenisatoren, Ultra-Schallsonatoren oder Perlmühlen mit z. B. Stahlkugeln von 0,5 bis 3 mm Durchmesser erreicht wird.

Geeignete Medien für die Herstellung der Dispersionen sind chlorierte Kohlenwasserstoffe wie beispielsweise Methylenchlorid, Ethylenchlorid, Chloroform oder Chlorbenzol, wobei allerdings auch Zusätze von beispielsweise Methanol, Ethanol, Aceton, Toluol, Xylol, Ethylenglykol und seinen Mono-oder Diethern, Propylenglykol und seinen Ethern, Glyzerin, Laurylalkohol und seinen Ethern und Estern oder Phthalsäureestern mitverwendet werden können, wobei solche Zusätze wie beispielsweise Toluol oder Ether des Propylenglykols oder Ethylenglykols bevorzugt sind, die zu Erhöhung der Kristallinität des Polycarbonats bei der Gießfolienherstellung dienen.

Die so herstellbaren Dispersionen in den vorstehend genannten organischen Medien, die im allgemeinen Feststoffgehalte an Polycarbonat und Ruß beziehungsweise Polycarbonat und Graphit von 4 bis 25 Gew.- % vorzugsweise von 6 bis 18 Gew.- % enthalten, werden meist noch einer Feinfiltration mit mittleren Maschenweiten von unter 100 µm, vorzugsweise von unter 50 µm unterworfen, um Teilchenagglomerate zu entfernen.

Bei Verwendung von Ruß haben die so filtrierten Dispersionen im allgemeinen nur noch Teilchengrößen von weniger als 10 µm (Messung mittels Ultrazentrifuge oder Laserbeugung), vorzugsweise von weniger als 5 µm und im Idealfall von weniger als 2 µm.

Die ruß- oder graphithaltigen Polycarbonat-Schichten haben vorzugsweise eine Dicke von 0,006 mm bis 0,3 mm und insbesondere von 0,01 bis 0,2 mm und sind Gießfolien, die entweder ungereckt oder mono- oder biaxial um vorzugsweise 5 % bis 250 %, insbesondere um 10 % bis 200 % nach bekannten Verfahren gereckt sind.

Die Herstellung der Polycarbonatgießfolien aus den vorstehend beschriebenen Dispersionen kann auf Band- oder Trommelgießmaschinen mit bekannten Gießern wie Abstreif- oder Druckgießern erfolgen, wobei die hergestellten Polycarbonatfilme einen Lösungsmittelgehalt von 0,2 bis 12 Gew.- % (VDE 0345), vorzugsweise 0,5 bis 8 Gew.- % und insbesondere Lösungsmittelgehalte von 0,6 bis 5 Gew.- % vor dem Beschichtungsprozeß aufweisen.

Werden für die Beschichtung mit der Polycarbonatschicht B), gereckte ruß- oder graphithaltige Polycarbonatgießfolien als Schicht A) verwendet, so erfolgt die Reckung der oben beschriebenen Polycarbonatgießfolien, wobei der Lösungsmittelgehalt vor dem Reckprozeß durch separate Trocknung, vorzugsweise auf 0,5 bis 8 Gew.- %, eingestellt wird, auf technischen Reckeinrichtungen mono- oder biaxial, wobei das monoaxiale Verstrecken in Längsrichtung, d. h. in Gießrichtung des Gießfilms bevorzugt ist. Dazu sind bekannte technische, mit temperierbaren Walzen ausgerüstete Reckmaschinen, z. B. der Fa. Hofmann und Schwabe oder Kampf geeignet, wobei das Verstrecken in einer Einspaltreckung, d. h. zwischen einer beheizten Walze (1) mit der Einlaufgeschwindigkeit $V_1$ und einer beheizten Walze (2) mit der höchsten Temperatur, der sogenannten Recktemperatur, die im allgemeinen durch Ölbeheizung erreicht wird, und einer Auslaufgeschwindigkeit $V_2$ in einem Spalt von ca. 3 bis 10 mm Breite unter Variation des Reckverhältnisses $V_1 : V_2$ von 1 : 1,05 bis 1 : 3,5, vorzugsweise von 1 : 1,1 bis 1 : 3,0 und insbesondere von 1 : 1,2 bis 1 : 2,5 durchgeführt wird.

Im allgemeinen ist eine dritte Walze mit niedriegerer Temperatur als der Recktemperatur zur Thermofixierung nachgeschaltet.

Ebenso kann der Reckprozeß in einer Mehrspaltstreckung durchgeführt werden, wobei Reckmaschinen mit mehreren angetriebenen Walzen unterschiedlicher Geschwindigkeit und Temperatur verwendet werden und innerhalb der Verstreckzonen nicht angetriebene beheizte Walzen zur Vergleichmäßigung des Reckprozesses eingesetzt werden. Der Durchmesser der Walzen kann von z. B. 40 bis 300 mm variiert werden, wobei im allgemeinen die Oberfläche der Reckwalzen durch Strahlen aufgerauht ist oder Kunststoff- oder Keramik-beschichtete Walzen zur besseren Haftung verwendet werden. Die Temperatur der am höchsten beheizten Reckwalze wird als sogenannte Recktemperatur $T_R$ bezeichnet, die im Bereich von 170 bis 250 °C, vorzugsweise von 180 bis 230 °C variiert wird.

Die Schicht B) ist eine extrudierte Polycarbonatschicht, die man in bekannter Weise beispielsweise durch Extrusion aus einer Breitschlitzdüse bei Temperaturen zwischen 200 °C und 350 °C vorzugsweise zwischen 250 °C und 320 °C herstellt.

Die Verbindung der beiden Polycarbonatschichten A) und B) erfolgt vorzugsweise dadurch, daß man die unmittelbar nach der Extrusion erhaltene Polycarbonatschicht entweder mit der Polycarbonatgießfolie gemäß Schicht A) oder mit der verstreckten Polycarbonatgießfolie gemäß Schicht A) zwischen zwei Walzen unter Drücken von 5 bis 100 bar und bei Temperaturen der aus der Breitschlitzdüse austretenden Schmelze von 200 bis 320 °C verpreßt.

Gegenstand der vorliegenden Erfindung ist somit außerdem ein Verfahren zur Herstellung der erfindungsgemäßen Polycarbonat-Verbundwerkstoffe, bestehend aus den eingangs definierten Schichten A) und B), das dadurch gekennzeichnet ist, daß man eine durch Extrusion in bekannter Weise hergestellte Polycarbonatextrusionsfolie, aus aromatischem, thermoplastischem Polycarbonat mit einem $\bar{M}w$ (Gewichtsmittelmolekulargewicht) von 10 000 bis 60 000 die noch bis zu 45 Gew.- %, bezogen auf Gesamtgewicht an Schicht B), thermoplastische Polyethylenterephthalate, thermoplastische Polybutylenterephthalate und/oder ABS-Kunststoffe enthalten kann, einer Dicke von 0,02 bis 5 mm mit einer Polycarbonatgießfolie, aus aromatischem, thermoplastischem Polycarbonat mit einem $\bar{M}w$ (Gewichtsmittelmolekulargewicht) von 20 000 bis 300 000 die gegebenenfalls verstreckt sein kann, mit einem Gehalt an Ruß oder Graphit in Mengen von 5 bis 45 Gew.- %, bezogen auf das Gewicht der Polycarbonatgießfolie, einem spezifischen Oberflächenwiderstand von 5 bis $10^6$ Ω, und einer Dicke von 0,002 bis 0,4 mm, zwischen zwei Walzen unter Drücken von 5 bis 100 bar und bei Schmelze-Temperaturen von 200 bis 320 °C verpreßt, wobei eine der Walzen, speziell die Anpreßwalze, bevorzugt eine Kunststoff- oder Gummibeschichtete Walze ist.

Die erhaltenen erfindungsgemäßen Verbundwerkstoffe besitzen gute mechanische Festigkeit und eine Dauerwärmeformbeständigkeit bis 140 °C.

Überraschenderweise ändert sich der spezifische Oberflächenwiderstand des vorgefertigten elektrisch leitfähigen Polycarbonatfilms nicht, wenn er mit einer Polycarbonatschmelze bei Temperaturen von über 200 °C in Berührung kommt. Deshalb gelingt es, die gute Leitfähigkeit und mechanische Festigkeit der füllstoffhaltigen Polycarbonat-Gießfilme und besonders der verstreckten Polycarbonatfilme auf extrudiertes Polycarbonat zu übertragen. Die erfindungsgemäßen Verbundwerkstoffe besitzen konstanten spezifischen Oberflächenwiderstand über große Flächen, d. h., sehr geringe Standardabweichungen, was für viele Anwendungen in der Elektronik notwendig ist ; sie besitzen außerdem eine ausgezeichnete Oberflächenglätte und im Falle der Verwendung verstreckter elektrisch leitfähiger Polycarbonatfilme besonders gute Langzeiteigenschaften hinsichtlich der elektrischen Widerstandswerte.

Überraschend ist auch, daß die erfindungsgemäßen Polycarbonat-Verbundfolien einschichtigen, rußgefüllten Polycarbonat-Extrusionsfolien gleicher Dicke in ihrem Verformungsverhalten, beispielsweise beim Tiefziehen überlegen sind, welche sich dadurch äußert, daß eine erheblich geringere Änderung der spezifischen Oberflächenwiderstände an den tiefgezogenen Flächen der erfindungsgemäßen Verbundfolien gemessen wird als bei entsprechenden tiefgezogenen Polycarbonat-Extrusionsfolien gleicher Dicke und gleichen Rußgehalts.

Ein weiterer Vorteil der erfindungsgemäßen Verbundfolien besteht darin, daß sehr dünne, ungereckte oder gereckte, ruß- oder graphithaltige Polycarbonatgießfolien, beispielsweise einer Dicke von weniger als 0,05 mm, durch die erfindungsgemäße Verbundbildung für eine bessere Handhabung stabilisiert sind, also beispielsweise eine bessere thermische Verformbarkeit ermöglichen. Diese Verbesserung war nicht zu erwarten, da rußgefüllte, unverstreckte und besonders verstreckte Polycarbonatfolien im Dickenbereich von unter 0,05 mm bei Rußgehalten über 15 Gew.-% nur sehr eingeschränkt tiefziehfähig sind.

Geeignete, nichtleitfähige Additive bzw. Füllstoffe in der Isolierschicht B) sind außer den bereits genannten Farbstoffen, halogenierte Phthalimide als Flammschutzmittel wie Hexamethylen-bis-tetrachlorphthalimid, Weichmacher, Pigmente wie $TiO_2$, $BaSO_4$ oder $BaCO_3$, oder Talkum als Füllstoff.

Die erfindungsgemäßen Polycarbonat-Verbundwerkstoffe, die aus einer elektrisch leitfähigen Schicht A) und aus einer elektrisch isolierenden Schicht B) bestehen, sind überall dort verwendbar, wo die geringen spezifischen Oberflächenwiderstände der Schicht A) zum Transport elektrischer Ladungen oder zur Umwandlung von elektrischer Energie in Wärmeenergie oder auch zur Abschirmung elektromagnetischer Strahlung auf großen Flächen genutzt werden sollen, die dann mit Vorteil den zu schützenden Bauteilen durch Thermoverformung des Verbundwerkstoffs angepaßt werden können.

Die erfindungsgemäßen Polycarbonat-Verbundwerkstoffe sind beispielsweise für die Herstellung von hitzebeständigen Widerstandsfilmen, von Potentiometern, von Flächenheizelementen oder von dielektrischen Schichtungen in Hochspannungsausführung geeignet. Sie können eingesetzt werden, wenn elektrostatische Aufladung vermieden oder elektromagnetische Strahlung abgeschirmt werden muß, z. B. zum Schutz von MOS-Transistoren oder anderen Bauteilen der Digitalelektronik. Sie können auch zur Wärmeabsorption, z. B. des Sonnenlichts, dienen. Allgemein können sie eingesetzt werden, wenn Dauerwärmebeständigkeit von 130 bis 140 °C beim Transport des elektrischen Stroms verlangt wird. Elektrische Kontaktierungen der Leitschicht können während des Beschichtungsvorgangs oder auch anschließend z. B. unter Hitzeeinwirkung und Druck erfolgen. Ebenso können anschließend Metallschichten auf die elektrisch leitfähige Polycarbonatschicht aufgetragen werden. Die erfindungsgemäßen Polycarbonat-Verbundwerkstoffe können mit Vorteil als antistatisch ausgerüstete Abdeckplatten für Geräte eingesetzt werden, wenn die Isolierschicht kratzfest ausgerüstet sein muß. Sie sind auch für Folien- bzw. Membranschalter geeignet.

Durch Tiefziehen der erfindungsgemäßen Verbundwerkstoffe bei ca. 180 bis 280 °C, können beispielsweise Schutzkappen oder Gehäuse hergestellt werden, die MOS-Transistoren oder bipolare Halbleiter vor elektrostatischer Aufladung oder elektromagnetischer Strahlung schützen.

Für die Verformung durch Tiefziehen eignen sich besonders solche erfindungsgemäßen Verbundwerkstoffe mit einem Dickenverhältnis von ca. 20 : 1 bis 5 : 1, vorzugsweise von 12 : 1 bis 8 : 1, der Isolierschicht B) zu der elektrisch leitenden Schicht A), bei einer Gesamtdicke des Verbundwerkstoffs bis zu ca. 2 mm, vorzugsweise bis zu ca. 1 mm.

Gegenstand der vorliegenden Erfindung ist somit auch die Verwendung der erfindungsgemäßen Polycarbonat-Verbundwerkstoffe auf dem Elektrosektor.

Die in den folgenden Ausführungsbeispielen angegebenen Oberflächenwiderstände wurden mit dem Meßgerät FPP 5 000 der Fa. VEECO (Vier-Punkt-Messung) bei Raumtemperatur (20-25 °C) gemessen. Die Dimension ist $\Omega$ per square, d. h. $\Omega$/sq. Diese Werte unterscheiden sich kaum von den entsprechend DIN 53 482 erhaltenen spezifischen Oberflächenwiderständen (gemessen in $\Omega$).

Ausführungsbeispiele

Beispiel 1

In Methylenchlorid als Lösungs- und Dispersionsmittel wird ein Bisphenol A-Polycarbonat mit einem Gehalt von 0,5 Mol- % Cyclohexylbisphenol (Bisphenol Z) mit einer relativen Viskosität von $\eta$ rel. = 2,18 bei 25 °C und gelchromatographisch ermittelten Molekulargewichten von $\bar{M}w$ = 168 000 gelöst und ein Leitfähigkeitsruß mit einer mittleren Primärteilchengröße von 30 Nanometer (nm), einer BET-Oberfläche von 254 m²/g und einer DBP-Adsorption von 178 ml/100 g, mittels eines Rotor-Stator-Apparates und einer Perlmühle mit Stahlkugeln von 2 mm Durchmesser feinstdispergiert. Der Rußgehalt beträgt 15 Gew.- % des Gesamtfeststoffs Ruß/Polycarbonat. Diese feinteilige Dispersion wird über ein Filter mit einer mittleren Maschenweite von 50 µm filtriert und dann mit einer Viskosität von 9 200 mPas bei 25 °C auf einer Trommelgießmaschine zu einem elektrisch leitfähigen PC-Film mit einer Dicke von ca. 30 µm vergossen.

Dieser rußgefüllte Gießfilm, der einen Lösungsmittelrestgehalt von 1,6 % (nach VDE 0345) aufweist, wird direkt beim Extrudieren eines Bisphenol A-Polycarbonatgranulats mit einer relativen Lösungsviskosität von $\eta$ rel = 1,33 und mit einem Schmelzindex von 19,0 g/10 Min. bei 300 °C (nach DIN 53 735) gemeinsam mit der aus einer Breitschlitzdüse austretenden Schmelze, die dann eine Temperatur von ca. 260-290 °C hat, zwischen einer verchromten Stahlwalze mit einer Temperatur von ca. 85 °C und einer Gummiwalze mit einer Oberflächentemperatur von ca. 65 °C unter einem Anpreßdruck von 30 bar eingezogen und zu einem PC-Verbundfilm mit festhaftender elektrisch leitfähiger Schicht verarbeitet. Die Dicke der Polycarbonatschicht B) beträgt im Mittel 320 µm und die Gesamtdicke ca. 350-360 µm. Der Oberflächenwiderstand wird mit dem Gerät FPP 5 000 der Fa. VEECO zu 1 620 Ω/sq gemessen.

Diese Verbundfolie wird auf der Seite der Isolierschicht aus ca. 25 cm Abstand 12-15 s. lang wärmebestrahlt, wobei mit Hilfe von Temperaturmeßstreifen eine Temperatur an der Oberfläche von 240-260 °C gemessen wird. Nach dem erfolgten Tiefziehen in Richtung der beheizten Oberfläche der Isolierschicht mit einem quaderförmigen Metall-Formkörper (Länge 34,5 mm, Breite 32,4 mm, Höhe 17 mm), wird eine stabile Schutzkappe erhalten, die auf den Innenflächen folgende Oberflächenwiderstände aufweist. Ergebnisse einer Vier-Punktmessung mit dem Gerät FPP 5 000 der Fa. VEECO bei 20-25 °C in der Dimension Ω/sq :

| | |
|---|---|
| Zone 1 (Ausgangslaminat 350-360 µm) | 1 620 Ω/sq |
| Zone 2 (beheizte Zone mit einem Durchmesser von 105 mm) | 2 310 Ω/sq |
| Zone 3 (Seitenflächen) | 2 760 Ω/sq |
| Zone 4 (Deckfläche) | 1 715 Ω/sq |

## Vergleichsbeispiel A

Auf einem Doppelwellenextruder wird der Leitfähigkeitsruß des Beispiels 1 mit einem Anteil von 15 Gew.- % in ein Polycarbonat auf Bisphenol A-Basis mit einem Schmelzindex von 19,0 g/10 min bei 300 °C nach DIN 53 735, was einer relativen Lösungsviskosität von $\eta$ rel = 1,33 entspricht, bei Schmelzetemperaturen im Extruder von 300 bis 320 °C eingearbeitet, und beim Austrag aus einer Breitschlitzdüse wird mittels eines Walzenstuhls eine ca. 350 µm dicke Polycarbonatextrusionsfolie mit einem Oberflächenwiderstand von 32 300 Ω/sq hergestellt.

Nach Durchführung eines Tiefziehversuches entsprechend den unter Beispiel 1 angeführten Bedingungen werden für die verformten Zonen folgende Oberflächenwiderstände festgestellt :

| | |
|---|---|
| Zone 1 (einschichtige Extrusionsfolie, Dicke ca. 350 µm) | 32 300 Ω/sq |
| Zone 2 (beheizte Zone mit einem Durchmesser von 105 mm) | 166 900 Ω/sq |
| Zone 3 (Seitenflächen) | 40 500 Ω/sq |
| Zone 4 (Deckfläche) | 17 230 Ω/sq |

Die Oberflächenwiderstände der einschichtigen rußgefüllten Extrusionsfolie und auch der entsprechenden tiefgezogenen Flächen der mit gleichem Rußfüllungsgrad (15 Gew.- %) ausgerüsteten PC-Extrusionsfolie sind um mehr als das Zehnfache höher als bei dem erfindungsgemäßen PC-Verbundfilm entsprechend Beispiel 1.

## Beispiel 2

Unter Verwendung des Copolycarbonats des Beispiels 1 wird entsprechend den in Beispiel 1 aufgeführten Bedingungen ein Polycarbonat-Gießfilm mit einem Gehalt von 30 Gew.- % (bezogen auf den Gesamtfeststoff) eines Leitfähigkeitsrußes mit einer BET-Oberfläche von 1 000 m²/g und einer DBP-Absorption von 400 ml/100 g in einer Dicke von 35 μm hergestellt. Der Oberflächenwiderstand beträgt 55 Ω/sq bei einem Methylenchlorid-Restgehalt von 1,4 % (nach VDE 0345).

Ohne separate Nachtrocknung wird dieser rußgefüllte PC-Gießfilm mit einer Extrusionsschmelze aus dem in Beispiel 1 angegebenen Bisphenol A-Polycarbonat in der in Beispiel 1 beschriebenen Weise zwischen zwei Walzen mit einer 400 μm dicken Isolierschicht belegt. Die festhaftende elektrisch leitfähige Schicht weist dann unverändert einen Oberflächenwiderstand von ca. 55 Ω/sq auf.

Die mit einem Tiefziehkörper (gleiche Geometrie wie in Beispiel 1 aufgeführt) gefertigte Kappe — bei einer Bestrahlungszeit von 18-20 s und den unter Beispiel 1 aufgeführten Tiefziehbedingungen — zeigt folgende spez. Oberflächenwiderstände der einzelnen Zonen :

| | |
|---|---|
| Zone 1 | 55,8 Ω/sq |
| (Ausgangslaminat, Dicke ca. 440 μm) | |
| Zone 2 | 58,0 Ω/sq |
| (beheizte Zone mit einem Durchmesser von 105 mm) | |
| Zone 3 | 74,3 Ω/sq |
| (Seitenflächen) | |
| Zone 4 | 49,5 Ω/sq |
| (Deckfläche) | |

Diese Verbundfolie ist einer einschichtigen Extrusionsfolie gleicher Dicke und bei gleichem Füllungsgrad mit dem obengenannten Leitfähigkeitsruß bezüglich der Widerstandswerte, des Tiefziehverhaltens und der damit verbundenen Änderung des Oberflächenwiderstands und auch der Abschirmwirkung gegenüber elektromagnetischer Strahlung beträchtlich überlegen.

### Beispiel 3

Ein entsprechend den in Beispiel 1 angegebenen Bedingungen (Bisphenol A/Bisphenol Z-Copolycarbonat) hergestellter elektrisch leitender PC-Gießfilm mit einem Rußfüllungsgrad von 10 Gew.-% des in Beispiel 2 verwendeten Rußes (bezogen auf den Gesamtfeststoff Ruß/Polycarbonat) mit einer durchschnittlichen Dicke von 28 μm wird in der unter Beispiel 1 beschriebenen Weise mit einer Polycarbonatschmelze (Bisphenol-A-Granulat des Beispiels 1) als Isolierschicht in der Dicke von ca. 300 μm beschichtet.

Der erhaltene Polycarbonatverbundfilm mit einer Gesamtdicke von ca. 330 μm besitzt auf der elektrisch leitenden Seite einen Oberflächenwiderstand von 1 720 Ω/sq.

Die durch Tiefziehen bei ca. 240 °C mit dem Formkörper des Beispiels 1 hergestellte Kappe hat folgende Oberflächenwiderstände (gemessen in Ω/sq)

| | |
|---|---|
| Zone 1 | 1 720 Ω/sq |
| (Ausgangslaminat Dicke 330 μm) | |
| Zone 2 | 2 330 Ω/sq |
| (beheizte Zone mit einem Durchmesser von 105 mm) | |
| Zone 3 | 3 640 Ω/sq |
| (Seitenflächen) | |
| Zone 4 | 1 694 Ω/sq |
| (Deckfläche) | |

### Beispiel 4

Eine entsprechend Beispiel 1 hergestellte elektrisch leitende PC-Gießfolie auf der Basis eines reinen Bisphenol A-Polycarbonats mit einem membranosmometrisch ermittelten Molekulargewicht von $\overline{M}n = 49\,000$ und einer relativen Lösungsviskosität von 2,19 mit einem Graphitpulver-Gehalt von 40 Gew.-% hat eine Dicke von 20 μm und wird ohne Nachtrocknung mit einem Methylenchloridrestanteil von 1,5 % (nach VDE 0345) nach der in Beispiel 1 angegebenen Art beschichtet. Die Dicke der Isolierschicht auf der Grundlage eines Bisphenol A-Polycarbonats wie in Beispiel 1 beträgt ca. 320 μm. Es wird eine PC-Verbundfolie mit hoher Glätte und guter Haftung der leitenden Schicht erhalten, die einen spez. Oberflächenwiderstand von 16 800 Ω/sq aufweist.

### Beispiel 5

Entsprechend den Angaben in Beispiel 1 wird eine feinstdispergierte Ruß/PC/Methylenchlorid-Dispersion auf der Grundlage eines Bisphenol A-Polycarbonats mit einem Gehalt von 0,5 Mol-% Bisphenol Z und einer relativen Lösungsviskosität von $\eta$ rel = 2,18 zu einem elektrisch leitfähigen PC-Film (5a) mit einem Rußgehalt von 27 Gew.-% des Leitfähigkeitsrußes wie in Beispiel 1 und einer durchschnittlichen Dicke von ca. 60 μm vergossen, der einen Gewichtsverlust (nach VDE 0345) von 3,0 % zeigt. Ebenso wird auf einer Trommelgießmaschine ein ca. 35 $\mu$m dicker elektrisch leitfähiger PC-Film (5b) gleicher Zusammensetzung hergestellt, der einen Gewichtsverlust von 2,1 % (VDE 0345) besitzt.

### 5·1

Beim Extrudieren eines Bisphenol-A-Polycarbonat-Granulats mit einem Bariumsulfat-Gehalt von 30 Gew.-% (Schmelzindex von 27,2 g/10 min bei 300 °C nach DIN 53 735) wird die 60 $\mu$m dicke rußgefüllte Gießfolie (5a) ohne weitere Trocknung hinter einer Breitschlitzdüse bei einer Schmelzetemperatur von ca. 260-280 °C zwischen einer Gummiwalze mit einer Temperatur von $T_1$ ca. 80 °C und einer Metallwalze mit strukturierter Oberfläche mit der Temperatur $T_2$ von ca. 120 °C gemeinsam mit der BaSO$_4$-gefüllten PC-Schmelze bei einem Anpreßdruck von 80 bar eingezogen und zu einem PC-Verbundfilm mit rauher, kratzbeständiger Oberfläche und elektrisch leitender Unterschicht, für die unverändert gegenüber dem ursprünglichen Gießfilm ein Oberflächenwiderstand von 158-160 $\Omega$/sq des PC-Verbundfilms mit einer Gesamtdicke von ca. 300 $\mu$m festgestellt wird, verarbeitet.

### 5·2

Der 35 $\mu$m PC-Gießfilm (5b) wird in der in Beispiel 1 beschriebenen Weise mit einer Isolierschicht (Dicke 350 $\mu$m) aus einem Bisphenol A-Polycarbonat ($\eta$ rel = 1,34, Schmelzindex von 16 g/10 min bei 300 °C nach DIN 53 735) beschichtet und unter den in Beispiel 1 angeführten Bedingungen zu einer Haube mit den Abmessungen der Tiefziehform des Beispiels 1 thermoverformt.

Es werden folgende Oberflächenwiderstände gemessen (FPP 5 000 der Fa. VEECO):

| | |
|---|---|
| Zone 1 (Ausgangslaminat, Dicke ca. 380 $\mu$m) | 270 $\Omega$/sq |
| Zone 2 (beheizte Zone mit einem Durchmesser von 105 mm) | 347 $\Omega$/sq |
| Zone 3 (Seitenfläche) | 429 $\Omega$/sq |
| Zone 4 (Deckfläche) | 257 $\Omega$/sq |

### 5·3

Die elektrisch leitfähige PC-Folie (5b) wird ebenso mit einer Polycarbonat-Schmelze, die zu 60 Gew.-% aus dem Bisphenol A-Polycarbonat des Beispiels 5.2 und zu 40 Gew.-% aus Polybutylenterephthalat besteht (Schmelzindex des Compounds von 38,5 g/10 min nach DIN 53 735) ohne Veränderung des vorgegebenen Oberflächenwiderstandes von ca. 270 $\Omega$/sq bei einer Schmelztemperatur von ca. 265 °C in der Extrusionsdüse und Temperaturen von $T_1$ = 70 °C der ersten Walze und von $T_2$ (zweite Walze) ca. 60 °C bei einem Anpreßdruck von 55 bar zu einem modifizierten Polycarbonat-Laminat mit guter Chemikalienbeständigkeit der Isolierschicht verpreßt.

### Beispiel 6

Der in Beispiel 5 als 5 a beschriebene elektrisch leitfähige PC-Film mit einer mittleren Dicke von ca. 60 $\mu$m und einem Rußgehalt von 27 Gew.-% wird auf einer Hofmann und Schwabe-Reckmaschine bei einer Recktemperatur von $T_R$ = 220 °C, der Temperatur der am höchsten beheizten Reckwalze und verschiedenen Verhältnissen von Einlauf ($V_1$) — zu Auslaufgeschwindigkeit ($V_2$) in Längsrichtung (Gießrichtung) verstreckt.

Es werden folgende verstreckte elektrisch leitfähige PC-Filme erhalten, die nach DIN 53 455 Reißdehnungen von 50-60 % und Reißfestigkeiten von 75-100 N/mm$^2$ und Restlösungsmittelgehalte (Methylenchlorid) von 1,1 bis 1,6 % (VDE 0345) aufweisen.

| Verstreckter, rußgefüllter (27 Gew.-%) PC-Film | Reckverhältnis $V_1/V_2$ | mittlere Dicke ($\mu$m) |
|---|---|---|
| 6 a | 1:1,2 | ca. 50 |
| 6 b | 1:1,7 | ca. 35 |

Entsprechend den in Beispiel 1 angegebenen Bedingungen werden die verstreckten rußgefüllten PC-Filme mit einer Polycarbonat-Schmelze wie in Beispiel 1 in einer Dicke von ca. 400-420 μm mit einer PC-Isolierschicht beschichtet.

Die erhaltenen PC-Verbundfolien mit einer Gesamtdicke von ca. 450 μm werden mit dem in Beispiel 1 angegebenen Formkörper in der beschriebenen Weise thermoverformt, wobei Schutzkappen erhalten werden, deren Flächen folgende Oberflächenwiderstände aufweisen :

|  | Laminat 6 a (ca. 450 μm Dicke) | Laminat 6 b (ca. 440 μm Dicke) |
|---|---|---|
| Zone 1 (Ausgangslaminat) | 198 Ω/sq | 495 Ω /sq |
| Zone 2 (beheizte Zone ∅ 105 mm) | 257 Ω/sq | 502 Ω /sq |
| Zone 3 (Seitenflächen) | 278 Ω /sq | 606 Ω /sq |
| Zone 4 (Deckflächen) | 211 Ω/sq | 334 Ω /sq |

Tiefziehkörper (Länge 34,5 mm, Breite 32,4 mm, Höhe 17 mm) Oberflächenwiderstände in Ω/sq, gemessen mit dem Gerät FPP 5 000 der Fa. VEECO bei 20-25 °C.

**Patentansprüche**

1. Polycarbonat-Verbundwerkstoffe, bestehend aus

A) einer aromatischen, thermoplastischen Polycarbonat-Schicht mit einem Gehalt an Ruß oder Graphit von 5 bis 45 Gew.- %, bezogen auf das Gewicht der Polycarbonatschicht A), mit einem $\bar{M}w$ (Gewichtsmittelmolekulargewicht) von 20 000 bis 300 000, einem spezifischen Oberflächenwiderstand von 5 bis $10^6$ Ω und einer Dicke von 0,002 bis 0,4 mm und

B) einer damit fest verbundenen Schicht aus aromatischem, thermoplastischem Polycarbonat mit einem $\bar{M}w$ (Gewichtsmittelmolekulargewicht) von 10 000 bis 60 000 und mit einer Dicke von 0,02 bis 5 mm.

2. Polycarbonat-Verbundwerkstoffe gemäß Anspruch 1, dadurch gekennzeichnet, daß die Schicht A) einen Gehalt an Ruß oder Graphit von 10 bis 40 Gew.- % hat.

3. Polycarbonat-Verbundwerkstoffe gemäß Anspruch 1, dadurch gekennzeichnet, daß die Schicht A) einen Gehalt an Ruß oder Graphit von 20 bis 35 Gew.- % hat.

4. Polycarbonat-Verbundwerkstoffe gemäß Ansprüche 1 bis 3, dadurch gekennzeichnet, daß das Dickenverhältnis von Schicht B) zu Schicht A) von ca. 20 :1 bis 5 :1 liegt und die Gesamtdicke des Verbundwerkstoffs bis ca. 2 mm beträgt.

5. Polycarbonat-Verbundwerkstoffe gemäß Ansprüchen 1 bis 4, dadurch gekennzeichnet, daß die Schicht B) noch bis zu 45 Gew.- %, bezogen auf Gesamtgewicht an Schicht B), thermoplastische Polyethylenterephthalate, thermoplastische Polybutylenterephthalate und/oder ABS-Kunststoffe enthalten kann.

6. Verfahren zur Herstellung der Polycarbonat-Verbundwerkstoffe der Ansprüche 1 bis 5, dadurch gekennzeichnet, daß man eine durch Extrusion in bekannter Weise hergestellte Polycarbonatextrusionsfolie, aus arometischem, thermoplastischem Polycarbonat mit einem $\bar{M}w$ (Gewichtsmittelmolekulargewicht) von 10 000 bis 60 000 die noch bis zu 45 Gew.- %, bezogen auf Gesamtgewicht an Schicht B), thermoplastische Polyethylenterephthalate, thermoplastische Polybutylenterephthalate und/oder ABS-Kunststoffe enthalten kann, einer Dicke von 0,02 bis 5 mm mit einer Polycarbonatgießfolie aus aromatischem, thermoplastischem Polycarbonat mit einem $\bar{M}w$ (Gewichtsmittelmolekulargewicht) von 20 000 bis 300 000, die gegebenenfalls verstreckt sein kann, mit einem Gehalt an Ruß oder Graphit in Mengen von 5 bis 45 Gew.- %, bezogen auf das Gewicht der Polycarbonatfolie einem spezifischen Oberflächenwiderstand von 5 bis $10^6$ Ω, und einer Dicke von 0,002 bis 0,4 mm zwischen zwei Walzen unter Drücken von 5 bis 100 bar und bei Schmelze-Temperaturen des extrudierten Films von 200 bis 320 °C verpreßt.

7. Verwendung der Polycarbonat-Verbundwerkstoffe der Ansprüche 1 bis 5 auf dem Elektrosektor.

## Claims

1. Polycarbonate composite materials consisting of

A) an aromatic, thermoplastic polycarbonate layer having a content of carbon black or graphite of 5 to 45 % by weight, based on the total weight of the polycarbonate layer A) and having a $\bar{M}w$ (weight-average molecular weight) of 20,000 to 300,000, a surface resistivity of 5 to $10^6$ $\Omega$ and a thickness of 0.002 to 0.4 mm, and

B) a layer, firmly bonded thereto, of an aromatic, thermoplastic polycarbonate having a $\bar{M}w$ (weight-average molecular weight) of 10,000 to 60,000 and a thickness of 0.02 to 5 mm.

2. Polycarbonate composite materials according to Claim 1, characterised in that the layer A) has a content of carbon black or graphite of 10 to 40 % by weight.

3. Polycarbonate composite materials according to Claim 1, characterised in that the layer A) has a content of carbon black or graphite of 20 to 35 % by weight.

4. Polycarbonate composite materials according to Claims 1 to 3, characterised in that the thickness ratio of layer B) to layer A) is from about 20 : 1 to 5 : 1 and the total thickness of the composite material is up to about 2 mm.

5. Polycarbonate composite materials according to Claims 1 to 4, characterised in that the layer B) may also contain up to 45 % by weight, based on the total weight of layer B), of thermoplastic polyethylene terephthalates, thermoplastic polybutylene terephthalates and/or ABS plastics.

6. Process for the production of the polycarbonate composite materials of Claims 1 to 5, characterised in that an extruded polycarbonate film of an aromatic, thermoplastic polycarbonate having a $\bar{M}w$ (weight-average molecular weight) of 10,000 to 60,000, which has been produced by extrusion, in a known manner, may also contain up to 45 % by weight, based on the total weight of layer B), of thermoplastic polyethylene terephthalates, thermoplastic polybutylene terephthalates and/or ABS plastics and has a thickness of 0.02 to 5 mm, is pressed together with a cast polycarbonate film of an aromatic, thermoplastic polycarbonate with a $\bar{M}w$ (weight-average molecular weight) of 20,000 to 300,000, which may optionally be stretched, has a content of carbon black or graphite in quantities of 5 to 45 % by weight, based on the weight of the polycarbonate film, a surface resistivity of 5 to $10^6$ $\Omega$ and a thickness of 0.002 to 0.4 mm, between two rolls under pressures of 5 to 100 bar and at melt temperatures of the extruded film of 200 to 320 °C.

7. Use of the polycarbonate composite materials of Claims 1 to 5 in the electrical sector.

## Revendications

1. Matériaux composites à base de polycarbonates, constitués

A) d'une couche de polycarbonate aromatique thermoplastique ayant une teneur en noir de fumée ou en graphite de 5 à 45 % en poids, par rapport au poids de la couche de polycarbonate A), avec une valeur $\bar{M}p$ (moyenne en poids du poids moléculaire) de 20 000 à 300 000, une résistivité de surface de 5 à $10^6$ $\Omega$ et une épaisseur de 0,002 à 0,4 mm, et

B) d'une couche, solidement liée à la précédente, d'un polycarbonate thermoplastique aromatique ayant une valeur $\bar{M}p$ (moyenne en poids du poids moléculaire) de 10 000 à 60 000 et une épaisseur de 0,02 à 5 mm.

2. Matériaux composites à base de polycarbonates suivant la revendication 1, caractérisés en ce que la couche A) a une teneur en noir de fumée ou en graphite de 10 à 40 % en poids.

3. Matériaux composites à base de polycarbonates suivant la revendication 1, caractérisés en ce que la couche A) a une teneur en noir de fumée ou en graphite de 20 à 35 % en poids.

4. Matériaux composites à base de polycarbonates suivant les revendications 1 à 3, caractérisés en ce que le rapport d'épaisseurs de la couche B) à la couche A) a une valeur d'environ 20 :1 à 5 :1 et l'épaisseur totale du matériau composite va jusqu'à environ 2 mm.

5. Matériaux composites à base de polycarbonates suivant les revendications 1 à 4, caractérisés en ce que la couche B) peut contenir encore jusqu'à 45 % en poids, par rapport au poids total de couche B), de téréphtalates de polyéthylène thermoplastiques, de téréphtalates de polybutylène thermoplastiques et/ou de matières plastiques ABS.

6. Procédé de production de matériaux composites à base de polycarbonates suivant les revendications 1 à 5, caractérisé en ce qu'on assemble sous pression une feuille de polycarbonate produite par extrusion d'une manière connue, formée d'un polycarbonate aromatique thermoplastique ayant une valeur $\bar{M}p$ (moyenne en poids du poids moléculaire) de 10 000 à 60 000, qui peut encore contenir jusqu'à 45 % en poids, par rapport au poids total de couche B), de téréphtalates de polyéthylène thermoplastiques, de téréphtalates de polybutylène thermoplastiques et/ou de matières plastiques ABS, d'une épaisseur de 0,02 à 5 mm, avec une feuille coulée de polycarbonate, formée d'un polycarbonate aromatique thermoplastique ayant une valeur $\bar{M}p$ (moyenne en poids du poids moléculaire) de 20 000 à 300 000, qui peut éventuellement être étirée, avec une teneur en noir de fumée ou en graphite de 5 à 45 % en poids par rapport au poids de la feuille de polycarbonate, une résistivité de surface de 5 à $10^6 \Omega$ et une épaisseur de 0,002 à 0,4 mm, entre deux cylindres sous des pressions de 5 à 100 bars et à des températures de la masse fondue du film extrudé de 200 à 320 °C.

7. Utilisation des matériaux composites à base de polycarbonates suivant les revendications 1 à 5 dans le secteur électrotechnique.